# EUROPÄISCHE PATENTANMELDUNG

(11) **EP 2 993 396 A1**
(43) Veröffentlichungstag der Anmeldung: **09.03.2016**
(21) Anmeldenummer: 15002156.6
(22) Anmeldetag: 21.07.2015
(51) Int. Cl.: F22B 37/18, B01D 1/00, B01D 1/04, F22B 1/28

(54) **VORRICHTUNG ZUR PULSATIONS- UND OSZILLATIONSFREIEN TOTALVERDAMPFUNG VON MEDIEN; GERÄT ZUM BEDAMPFEN VON OBERFLÄCHEN**

(30) Priorität: 02.09.2014 DE 102014013019
(71) Anmelder: Universität Stuttgart, 70174 Stuttgart (DE)
(72) Erfinder: Aschenbrenner, Holger, 70378 Stuttgart (DE)
(74) Vertreter: Patentanwälte Schuster, Müller & Partner mbB

(57) **Zusammenfassung**

Die Erfindung geht aus von einer Vorrichtung 1 zur pulsations- und oszillationsfreien Totalverdampfung von Medien, wobei die Vorrichtung 1 ein Verdampfungsrohr 3 mit mindestens einem Eintritt 6 und mindestens einem Austritt 7 für die zu verdampfenden Medien aufweist und koaxial zumindest in einem Teil des Verdampfungsrohrs 3 ein Verdrängungskörper 4 angeordnet ist, wobei der Verdrängungskörper 4 zumindest über einen Teil seiner Längenausdehnung an einer Innenwandung 5 des Verdampfungsrohrs 3 anliegt, so dass mindestens ein Verdampfungskanal entsteht, und das Verdampfungsrohr 3 mittels einer Heizeinrichtung 8 temperierbar ist, und der Verdrängungskörper 4 bei einer größere Längen- als Breitenausdehnung zumindest dreieckigen Querschnitt aufweist und um seine Längsachse verdreht ist.

## Beschreibung

### Stand der Technik

Die Erfindung geht aus von einer Vorrichtung zur pulsations- und oszillationsfreien Totalverdampfung von Medien nach der Gattung des Oberbegriffs des Anspruchs 1 und einer Vorrichtung zur pulsations- und oszillationsfreien Totalverdampfung von Medien nach der Gattung des Oberbegriffs des Anspruchs 9 sowie einem Handgerät nach der Gattung des Oberbegriffs des Anspruchs 15.

Die Erzeugung pulsationsfreier Dampfströme für unterschiedlichste Anwendungsbereiche, beispielsweise in der Labor- und Versuchstechnik, ist eine überaus anspruchsvolle Aufgabe, weil hierbei eine kontinuierliche und vollständige Verdampfung der zu verdampfenden Medien gefordert wird. Die Verdampfung sollte ohne eine Zugabe von Trägergasen auskommen, robust und zuverlässig funktionieren, d. h. größtenteils unabhängig von Störungen ablaufen. Voraussetzung hierfür ist ein Phasenübergang des zu verdampfenden Mediums, insbesondere einer Flüssigkeit, in die Dampfphase (Verdampfung) ohne störende Nebeneffekte, wie beispielsweise eine unkontrollierte Blasenbildung. Aufgrund dieser Nebeneffekte, die für Siedevorgänge typisch und die Regel sind, kommt es zu Pulsationen, Schwankungen und/oder Druckstößen. Vorrichtungen zur pulsations- und oszillationsfreien Verdampfung von Medien, insbesondere Vorrichtungen zum Verdampfen kleiner Volumenströme (Durchsätze) und deren Herstellungsverfahren sind seit langem Stand der Technik. Zum Beispiel gibt es unterschiedlichste Anwendungen in allen technischen Anwendungsbereichen mit verschiedensten Flüssigkeiten, wobei die Verdampfung unter Bedingungen von Vakuum bis Überdruck (z. Zt. ungefähr bis 60 bar), von Raumtemperatur bis Hochtemperatur stets präzise funktionieren muss. Hierzu werden Verdampfungsvorrichtungen, insbesondere Fallfilmverdampfer und Mikrokanalverdampfer eingesetzt, wobei sich gezeigt hat, dass diese sowohl hinsichtlich der pulsations- und oszillationsfreien Verdampfung als auch in Bezug auf Verschmutzung bzw. Verstopfung der Verdampfungsvorrichtung aufgrund von Ablagerungen in den Verdampfungskanälen noch Optimierungspotenzial aufweisen. Darüber hinaus sind deren Herstellungsverfahren oft kompliziert bzw. die Herstellung sehr kostenintensiv.

Bekannt sind somit Verdampfer für kleine Durchsätze im Bereich von 0,01 - 1 g/h. Durchsätze > 0,01 g/h (ca. 5 µl/min) sind damit Stand der Technik und mit entsprechenden fachlichen Kenntnissen ausführbar. Niedrigere Durchsätze, im unteren µl oder sogar nl - Bereich setzten mit einem bis zu 1000-fach kleineren Volumenstrom allerdings neue Maßstäbe.

Die Offenlegungsschrift DE 199 63 594 A1 zeigt eine Vorrichtung in Mikrostrukturtechnik zum Hindurchleiten von Medien, die insbesondere zum Verdampfen flüssiger Medien geeignet ist. Die Vorrichtung weist einen schichtförmigen Aufbau auf, mit wenigstens einer ersten Schicht, die eine Anzahl von Mikrokanälen aufweist und durch die ein Wärmeträgermedium strömt. Nachteilig an dieser technischen Lösung ist, dass die Vorrichtung eine pulsations- und oszillationsfreie Verdampfung von Volumenströmen in einer Größenordnung von Mikro- (µl) oder Nanolitern (µl) nicht gewährleisten kann.

Die Patentschrift DE 101 32 370 B4 schützt eine Vorrichtung und ein Verfahren zum Verdampfen flüssiger Medien, wobei durch wenigstens einen Ersterhitzerteil zum Erhitzen und zumindest teilweise Verdampfen eines flüssigen Mediums mit wenigstens einem Kanal zum Durchleiten des Mediums und wenigstens einer ersten Heizeinrichtung, wenigstens einen Zweiterhitzerteil zur weiteren Erhitzung des erhitzten Mediums, mit wenigstens einem Kanal zum Durchleiten des Mediums und wenigstens einer zweiten Heizvorrichtung und zumindest einem Zwischenraum zwischen einem Ersterhitzerteil und einem Zweiterhitzerteil und/oder zwischen zwei Ersterhitzerteilen und/oder zwischen zwei Zweiterhitzerteilen zum Homogenisieren und/oder Verwirbeln und/oder Verdampfen sowie zum Weiterleiten des erhitzten Mediums vom Ausgang wenigstens eines Kanals eines Ersterhitzerteils zum Eingang wenigstens eines Kanals eines folgenden Erhitzerteils. Nachteilig an dieser technischen Lösung ist, dass die Vorrichtung eine pulsations- und oszillationsfreie Verdampfung von Volumenströmen in einer Größenordnung von Mikro- (µl) oder Nanolitern (nl) nicht gewährleisten kann.

Die Patentschrift DE 40 29 260 C1 zeigt einen Verdampfer, wobei die Totalverdampfung hierbei als Fallfilmverdampfung im Ringspalt zwischen zwei konzentrischen, beheizten Rohren stattfindet. Nachteilig an der in der vorgenannten Patentschrift gezeigten technischen Lösung ist, dass die Einstellung eines gleichmäßigen Fallfilms für kleine Flüssigkeitsdurchsätze problematisch ist und diese Ringspaltverdampfer wie alle Totalverdampfer außerdem auch zu einer stark pulsierenden Dampfproduktion neigen, wobei größere Flüssigkeitsbereiche überhitzen und dann schlagartig verdampfen. Darüber hinaus ist die Herstellung eines solchen Verdampfers kostenintensiv. Zudem ist die Verdampfung von Volumenströmen in einer Größenordnung von Mikro- oder Nanolitern mittels der vorgenannten technischen Lösung nicht zu realisieren.

In der Offenlegungsschrift DE 197 23 680 A1 wird ein Totalverdampfer für kleine Flüssigkeitsströme beschrieben, bei dem die zu verdampfende Flüssigkeit in mindestens einem Röhrchen oder mindestens einer Bohrungen zuerst durch einen Kaltraum, der so temperiert ist, dass eine Vorverdampfung von Flüssigkeit verhindert wird, und nachfolgend durch einen Heißraum, wobei die Totalverdampfung in dem mindestens einen engen Röhrchen respektive in der mindestens einen Bohrung des beheizten Heißraums stattfindet, um eine stoßende, ungleichmäßige Verdampfung weitgehend zu vermeiden, geführt wird. Zusätzlich wird durch Einbauten, wie beispielsweise Wendeln oder Drahtspiralen, in dem mindestens einen Verdampferröhrchen ein Herausschleudern von unverdampften Flüssigkeitströpfchen verhindert. Das mindestens eine Röhrchen oder die mindestens eine Bohrungen münden in einen Dampfraum, der als Pulsationsdämpfer mögliche Schwankungen in der Dampfproduktion minimiert, so dass mit einer in der Offenlegungsschrift beschriebenen Vorrichtung eine kontrollierte, pulsationsarme Totalverdampfung über einen weiten Durchsatzbereich sichergestellt werden kann. Nachteilig hieran sind der komplexe Aufbau und die aufwendige Fertigung mit mehreren engen und langen Bohrungen bzw. Röhrchen und den für jede Bohrung bzw. jedes Röhrchen vorzusehenden vorgenannten Einbauten. Auch bei dieser technischen Lösung ist die Verdampfung von Volumenströmen in einer Größenordnung von Mikro- (µl) oder Nanolitern (nl) nicht realisierbar.

Die Offenlegungsschrift DE 10 2005 023 956 A1 zeigt einen Totalverdampfer für Flüssigkeiten, bestehend aus einem Kaltraum zur Verhinderung einer Vorverdampfung, einem sich daran anschließenden Verdampfungsbereich mit einem engen Strömungsquerschnitt zur schnellen Verdampfung der Flüssigkeit und einem nachfolgenden Dampfraum zur Pulsationsdämpfung und zur kontrollierten Überhitzung des Dampfes, wobei der Verdampfungsbereich aus dem Spalt zwischen konzentrisch ineinander liegenden zylindrischen oder konusförmigen Rohrstücken gebildet wird und die für die Verdampfung und Überhitzung notwendige Wärme entweder durch elektrische Beheizung, durch ein heißes Fluid oder durch katalytische oder homogene Verbrennung über die Wand der konzentrischen Rohre eingetragen wird. Nachteilig hieran ist, dass durch die Verdampfungskanäle nur eine geringe Oberfläche zur Verdampfung bereitgestellt wird und die Verdampfungskanäle sehr schnell durch Ablagerungen verstopft werden können. Darüber hinaus erfordert die Herstellung der Verdampfungskanäle einen hohen technischen und zeitintensiven Aufwand und die Fertigungswerkzeuge sind einem hohen Verschleiß unterworfen. Außerdem erstreckt sich die Verdampfungszone nur auf einen kleinen Bereich, wodurch die Leistung der Heizpatrone nicht optimal genutzt werden kann oder nur über eine massive Bauweise des Verdampfers, welche einen erhöhten Material- und Fertigungsaufwand mit sich bringt. Des Weiteren neigt der mindestens eine Verdampfungskanal zu rascher und vollständiger Verstopfung, wodurch bei einer starken Verschmutzung und langandauernder Laufzeit die Zerlegbarkeit durch Verbacken des Materials aufgrund der Konstruktion (Passung) schwierig wird, was bei unsachgemäßem Umgang in der Vergangenheit zur Zerstörung führte oder eine Herstellerreparatur notwendig machte. Ein zusätzlicher Nachteil an der technischen Lösung ist, dass die Verdampfung von Volumenströmen in einer Größenordnung von Mikro- oder Nanolitern hiermit nicht zu realisieren ist.

Der Erfindung liegt daher die Aufgabe zugrunde, eine Vorrichtung zur pulsations- und oszillationsfreien Totalverdampfung von Medien zu entwickeln, die bei Gewährleistung einer zumindest gleichbleibenden Verdampfungsqualität zum einen geringeren fertigungstechnischen Aufwand und damit verbunden auch geringere Fertigungskosten erfordert und zum anderen die Verdampfung von Volumenströmen in einer Größenordnung von Mikro- oder Nanolitern realisierbar ist.

Die Aufgabe der Entwicklung einer Vorrichtung zur pulsations- und oszillationsfreien Totalverdampfung von Medien, insbesondere von Flüssigkeiten, wobei die Vorrichtung ein Verdampfungsrohr mit mindestens einem Eintritt und mindestens einem Austritt für die zu verdampfenden Medien aufweist und koaxial zumindest in einem Teil des Verdampfungsrohrs ein Verdrängungskörper angeordnet ist, wobei der Verdrängungskörper zumindest über einen Teil seiner Längenausdehnung an einer Innenwandung des Verdampfungsrohrs anliegt, so dass mindestens ein Verdampfungskanal entsteht, und das Verdampfungsrohr mittels einer Heizeinrichtung temperierbar ist, wird gemäß der erfindungsgemäßen Vorrichtung dadurch gelöst, dass der Verdrängungskörper eine größere Längen- als Breitenausdehnung und einen zumindest dreieckigen Querschnitt aufweist, wobei der Verdrängungskörper um seine Längsachse verdreht ist.

### Die Erfindung und ihre Vorteile

Die erfindungsgemäße Vorrichtung zur pulsations- und oszillationsfreien Totalverdampfung von Medien mit den kennzeichnenden Merkmalen des Anspruchs 1 hat den Vorteil, dass die Zuführung der Medien über den Eintritt, die Beheizung und der Austritt auf mikroskalare Bauräume dimensioniert (Mikro- bis Nanoliter-Bereich) ausgelegt sind. Zudem kann die erfindungsgemäße Vorrichtung ohne großen Fertigungsaufwand und damit sehr kostengünstig herstellt werden kann. Die erfindungsgemäße Vorrichtung hat den weiteren Vorteil, dass sie eine vollständige und stoßfreie Verdampfung des dosierten Mediums, insbesondere einer Flüssigkeit wie Wasser, ermöglicht. Aufgrund kleiner Querschnittsflächen entstehen in der Dampfphase hohe Strömungsgeschwindigkeiten die am Austritt des Verdampfungsrohrs einen Dampfstrahl erzeugen. Vorteilhaft ist zudem, dass die erfindungsgemäße Vorrichtung eine Technologie zur kontrollierten und definierten Mikrofilmbildung (durch Kondensation) auf Oberflächen ohne deren Verunreinigung zur Verfügung stellt. Das entwickelte Verdampferprinzip kann außerdem für zahlreiche flüssige Medien zur Ausbildung definierter Kondensationsflächen eingesetzt werden. Ein weiterer Vorteil der erfindungsgemäßen Lösung ist, dass hierdurch sehr kleine kompakte Verdampfer gebaut werden können, die bei maximal hoher Leistungsfähigkeit sehr wirtschaftlich sind. Darüber hinaus ist die Vorrichtung für Anwendungen unter stationären Bedingungen sowie für Anwendungen unter hochdynamischen Bedingungen sehr gut geeignet und einsetzbar. Zusätzlich ist eine stufenlose Auslegung der Vorrichtung möglich, so dass die Vorrichtung vom mikroskalaren Bereich (Nanoliter) bis hin zum makroskalaren Bereich (Milliliter) einsetzbar ist. Ein weiterer Vorteil ist, dass eine Funktionalität der Vorrichtung lageunabhängig gewährleistet werden kann.

Nach einer vorteilhaften Ausgestaltung der erfindungsgemäßen Vorrichtung weist der Verdrängungskörper eine mikrostrukturierte Oberfläche auf. Die mikrostrukturierte Oberfläche weist eine größere Verdampfungsoberfläche auf, wodurch das eintretende Medium schneller verdampft werden kann.

Nach einer zusätzlichen vorteilhaften Ausgestaltung der erfindungsgemäßen Vorrichtung weist die Innenwandung des Verdampfungsrohrs eine mikrostrukturierte Oberfläche auf. Die mikrostrukturierte Oberfläche der Innenwandung des Verdampfungsrohrs weist eine größere Verdampfungsoberfläche auf, wodurch das eintretende Medium schneller, kontrollierter und definiert verdampft werden kann.

Nach einer zusätzlichen vorteilhaften Ausgestaltung der erfindungsgemäßen Vorrichtung besteht der Verdrängungskörper aus einem porösen Material. vorteilhaft daran ist, dass hierdurch die zu Verdampfung des Mediums zur Verfügung stehende Oberfläche um ein Vielfaches erhöht wird und somit die Verdampfung noch effizienter stattfinden kann.

Nach einer zusätzlichen vorteilhaften Ausgestaltung der erfindungsgemäßen Vorrichtung wird das Verdampfungsrohr durch eine Heizeinrichtung mittels Wärmestrahlung temperiert. Vorteilhaft an einem Energieeintrag mittels Wärmestrahlung direkt auf die Verdampfungszone ist, dass in dem Verdampfungsrohr die Wärme indirekt über Wärmeleitung, hauptsächlich in Richtung des Austritts des Verdampfungsrohrs, transportiert wird, wodurch sich entsprechend niedrige angepasste Heizleistungen erzeugen und regeln lassen. Dadurch bedingt bleibt auch der Eintrittsbereich des Verdampfungsrohrs kühler, was einer Vorverdampfung des eintretenden Mediums entgegenwirkt.

Nach einer zusätzlichen vorteilhaften Ausgestaltung der erfindungsgemäßen Vorrichtung ist am Austritt aus dem Verdampfungsrohr eine Düse angeordnet. Vorteilhaft an der Verwendung einer Düse ist, dass durch die Vermischung mit Umgebungsluft die Ausbildung eines zielgerichteten Dampfstrahls erreicht wird.

Nach einer diesbezüglich vorteilhaften Ausgestaltung der erfindungsgemäßen Vorrichtung wird durch eine spezielle Düse ein zielgerichteter Dampfstrahl erzeugt. Bei Auftreffen auf eine kältere Oberfläche bildet sich in Abhängigkeit der Dauer der Bedampfung eine Kreisrunde Kondensatfläche.

Nach einer zusätzlichen vorteilhaften Ausgestaltung der erfindungsgemäßen Vorrichtung ist ein erzeugter Dampfstrom tropfenfrei und in Temperatur und/oder Flussrate regelbar. Der Vorteil ist, dass so eine systematische Belegung eines interessierenden Bereichs einer Probe, beispielsweise eines Fingerabdrucks, mit einer homogenen Kondensatschicht, die für einheitliche Kontrastierung nötig ist, möglich gemacht wird.

Die erfindungsgemäße Vorrichtung zur pulsations- und oszillationsfreien Totalverdampfung von Medien mit den kennzeichnenden Merkmalen des Anspruchs 9 hat den Vorteil, dass die Zuführung der Medien über den Eintritt, die Beheizung und der Austritt auf mikroskalare Bauräume dimensioniert (Mikro- bis Nanoliter-Bereich) ausgelegt sind. Zudem kann die erfindungsgemäße Vorrichtung ohne großen Fertigungsaufwand und damit sehr kostengünstig herstellt werden kann. Die erfindungsgemäße Vorrichtung hat den weiteren Vorteil, dass sie eine vollständige und stoßfreie Verdampfung des dosierten Mediums, insbesondere einer Flüssigkeit wie Wasser, ermöglicht. Ein zusätzlicher Vorteil besteht darin, dass durch das Gewebematerial eine größere Oberfläche erzeugt, wodurch der Phasenübergang des zu verdampfenden Mediums, insbesondere Wasser oder dgl., noch leichter und kontrollierter herbeigeführt werden kann und im 2-Phasengebiet eine definierte Trennfläche zwischen Flüssigkeit im Eintritt und gasförmigem Dampf am Austritt ausgebildet wird, die zudem auch zu einer weiteren Volumenverkleinerung beiträgt. Vorteilhaft ist zudem, dass die erfindungsgemäße Vorrichtung eine Technologie zur kontrollierten und definierten Mikrofilmbildung (durch Kondensation) auf Oberflächen ohne deren Verunreinigung zur Verfügung stellt. Das entwickelte Verdampferprinzip kann außerdem für zahlreiche flüssige Medien zur Ausbildung definierter Kondensationsflächen eingesetzt werden.

Nach einer vorteilhaften Ausgestaltung der erfindungsgemäßen Vorrichtung ist das Gewebematerial vorzugsweise ein Streckmetall, ein Gewebe, ein Hybridgewebe, ein Kunststoffgewebe, ein Textilgewebe, ein poröses Material, ein poröses Rohr, ein gestricktes Gewebe, ein gewebtes Gewebe, ein Material mit einer angerauten Oberfläche, ein beschichtetes Material, ein Netz (Mesh), ein Metalmesh, ein kettenartiges Gewebe, ein eine kapillarstruktur aufweisendes Material, ein eine sinterstruktur aufweisendes Material, ein Metalldruck, ein lasergesintertes Gewebe oder dergleichen.

Nach einer zusätzlichen vorteilhaften Ausgestaltung der erfindungsgemäßen Vorrichtung weist der Verdrängungskörper eine mikrostrukturierte Oberfläche auf. Die mikrostrukturierte Oberfläche weist eine größere Verdampfungsoberfläche auf, wodurch das eintretende Medium schneller verdampft werden kann.

Nach einer zusätzlichen vorteilhaften Ausgestaltung der erfindungsgemäßen Vorrichtung weist die Innenwandung des Verdampfungsrohrs eine mikrostrukturierte Oberfläche auf. Die mikrostrukturierte Oberfläche der Innenwandung des Verdampfungsrohrs weist eine größere Verdampfungsoberfläche auf, wodurch das eintretende Medium schneller, kontrollierter und definiert verdampft werden kann.

Nach einer zusätzlichen vorteilhaften Ausgestaltung der erfindungsgemäßen Vorrichtung besteht der Verdrängungskörper aus einem porösen Material. vorteilhaft daran ist, dass hierdurch die zu Verdampfung des Mediums zur Verfügung stehende Oberfläche um ein Vielfaches erhöht wird und somit die Verdampfung noch effizienter stattfinden kann.

Nach einer zusätzlichen vorteilhaften Ausgestaltung der erfindungsgemäßen Vorrichtung ist am Austritt aus dem Verdampfungsrohr eine Düse angeordnet. Vorteilhaft an der Verwendung einer Düse ist, dass durch die Vermischung mit Umgebungsluft die Ausbildung eines zielgerichteten Dampfstrahls erreicht wird.

Das erfindungsgemäße Handgerät zur Bedampfung von Oberflächen, insbesondere zur zerstörungslosen Sichtbarmachung von Fingerabdrücken oder dgl., mit den kennzeichnenden Merkmalen des Anspruchs 15 hat den Vorteil, dass das erfindungsgemäße Handgerät ein Bedampfungssystem zur Verfügung stellt, welches den Wasserdampffilm in der notwendigen Qualität reproduzierbar liefert. Zudem ist die Dampfmenge des erfindungsgemäßen Handgeräts hinsichtlich Dampftemperatur und/oder Nebeldichte regelbar und weist insbesondere die sehr unangenehme Eigenschaft, dass sich Tropfen im Dampfstrom bilden, nicht auf. Das Handgerät lässt zudem eine systematische Belegung des interessierenden Bereichs der Probe mit einer homogenen Kondensatschicht, die für einheitliche Kontrastierung nötig ist, zu und ist universell einsetzbar.

Weitere Vorteile und vorteilhafte Ausgestaltung der Erfindung sind der nachfolgenden Beschreibung, den Ansprüchen und den Zeichnungen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: einen Längsschnitt durch ein erstes Ausführungsbeispiel der erfindungsgemäßen Vorrichtung zur pulsations- und oszillationsfreien Totalverdampfung von Medien,
- Fig. 2: einen Längsschnitt durch ein zweites Ausführungsbeispiel der erfindungsgemäßen Vorrichtung,
- Fig. 3: eine perspektivische Darstellung eines Ausführungsbeispiels eines verdrehten Verdrängungskörpers und
- Fig. 4: eine Montageanleitung zum Zusammenbau der einzelnen Bauteile eines weiteren Ausführungsbeispiels der erfindungsgemäßen Vorrichtung.

### Beschreibung der Ausführungsbeispiele

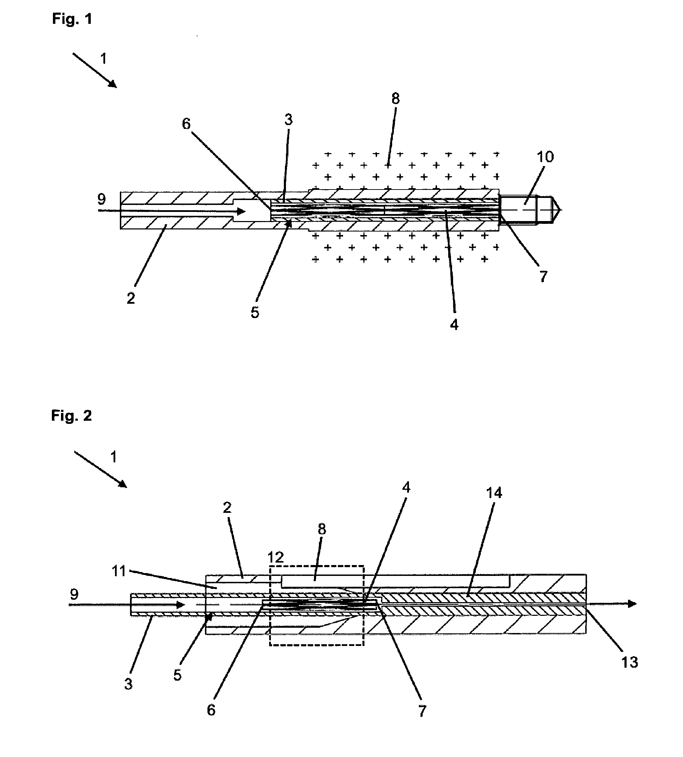

In Fig. 1 wird ein Längsschnitt durch ein erstes Ausführungsbeispiel der erfindungsgemäßen Vorrichtung 1 zur pulsations- und oszillationsfreien Totalverdampfung von Medien gezeigt. Die erfindungsgemäße Vorrichtung 1 ist in allen Bauteilen auf mikroskalare Bauräume des Mikroliter- (µl) oder Nanoliter-Bereichs (nl) dimensioniert. Die Vorrichtung 1 weist ein Gehäuse 2 auf, in welchem ein Verdampfungsrohr 3 angeordnet ist. Das Verdampfungsrohr 3 muss keinen kreisförmigen Querschnitt aufweisen, sondern kann auch beispielsweise einen polygonförmigen Querschnitt oder dgl. aufweisen. In das Verdampfungsrohr 3 ist über seiner gesamten Länge ein um seine Längsachse verdrehter Verdrängungskörper 4 eingebracht, der zumindest über einen Teil seiner Längenausdehnung an einer Innenwandung 5 des Verdampfungsrohrs 3 anliegt. Zudem weist das Verdampfungsrohr 3 einen Eintritt 6 und einen Austritt 7 für das zu verdampfende Medium auf. Das Verdampfungsrohr 3 wird mittels einer Heizeinrichtung 8 temperiert, insbesondere erwärmt, so dass ein in Pfeilrichtung 9 über den Eintritt 6 zugeführtes Medium im Verdampfungsrohr 3 verdampft wird und im Anschluss über eine am Austritt 7 angeordnete Düse 10 in die Umgebung ausströmt. Als Heizeinrichtung 8 dient im vorliegenden Ausführungsbeispiel eine Mantelheizung. Die erfindungsgemäße Vorrichtung 1 führt in ihrer Anordnung zu vollständiger, stoßfreier Verdampfung des dosierten Mediums, insbesondere von Wasser. Darüber hinaus ermöglicht die erfindungsgemäße Vorrichtung 1 eine Erzeugung von tropfenfreien, in Temperatur und Flussrate regelbaren Dampfströmen, die über die Düse 10, insbesondere gerichtet, in ein offenes Umgebungssystem gelangen. Aufgrund kleiner Querschnittsflächen, die sich zwischen dem Verdampfungsrohr 3 und dem Verdrängungskörper 4 bilden, entstehen in der Dampfphase hohe Strömungsgeschwindigkeiten die am Austritt 7 einen Dampfstrahl erzeugen. Durch die Verwendung einer speziellen Düse 10, welche zur Vermischung mit Umgebungsluft geeignet ist, wird die Ausbildung eines zielgerichteten Dampfstrahls erreicht. Bei Auftreffen auf eine kältere Oberfläche bildet sich in Abhängigkeit der Dauer der Bedampfung eine kreisrunde Kondensatfläche. Mit der erfindungsgemäßen Vorrichtung 1, kann somit ein kontrollierter Kondensatfilm präzise auf ein Asservat oder eine Oberfläche aufgebracht werden, und dient somit als Technologie zur kontrollierten Mikrofilmbildung (durch Kondensation) auf Oberflächen. Durch Nutzung der selektiven Absorption des Kondensats, beispielsweise Wasser, im IR-Licht (Infrarot-Licht) kann dies gezielt zur Kontrasterhöhung genutzt werden. Dadurch wird es möglich, dass z. B. Fingerabdrücke auf saugendem Untergrund ausgewertet werden können. Die Grundidee hierzu wird von Spurensuchern schon lange verwendet; es ist das altbewährte "Anhauchen" eines verdächtigen Bereichs auf einem Spurenträger, um latente Spuren durch einen Dampf-Belegungskontrast sichtbar zu machen. Dieses "Anhauchen" ist seit Aufkommen der DNA-Analysen zur genetischen Identifikation eines Täters jedoch nicht mehr möglich, weil Kontaminationen der Spuren durch die DNA des Spurensuchers so unvermeidlich sind. Durch die erfindungsgemäße Vorrichtung 1 können Wassermoleküle als Bestandteile einer Wasserdampfwolke über die verdächtige Spur, beispielsweise den Fingerabdruck, aufgebracht werden, ohne diese hinsichtlich ihrer DNA zu verunreinigen. Bereits bei Tageslicht können so lokale Unterschiede in der Wassermolekül-Belegungsdichte auf dem untersuchten Gegenstand sichtbar gemacht werden, da die Wassermoleküle sich zwischen den Lipidzonen konzentrieren und letztere nicht benetzt werden können. Durch die Wasserbelegung der Spur erhöht sich der bildgebende Kontrast um einige Faktoren bis Zehnerpotenzen. Für die Qualität der Kontrasterhöhung ist neben der Wasserbelegung in kontrollierter Dicke vor allem deren Gleichmäßigkeit in der Fläche wichtig. Die Kontrastverstärkung zum einen und eine hochauflösende IR-Kameratechnik zum anderen erlauben eine detaillierte Abbildung der Spur in Bildqualitäten, die konventioneller Daktyloskopie um nichts nachstehen. Die erfindungsgemäße Vorrichtung 1 ist für mobile Anwendungen, z. B. Handgeräte, geeignet.

Fig. 2 stellt einen Längsschnitt durch ein zweites Ausführungsbeispiel der erfindungsgemäßen Vorrichtung 1 dar. Die erfindungsgemäße Vorrichtung 1 ist in allen Bauteilen auf mikroskalare Bauräume des Mikroliter- oder Nanoliter-Bereichs dimensioniert. Die Vorrichtung 1 weist ein Gehäuse 2 auf, in welchem ein Verdampfungsrohr 3 angeordnet ist. Sowohl bei dem Gehäuse 2 als auch bei dem Verdampfungsrohr 3 ist der Innendurchmesser auf der Seite des Eintritts 6 des zu verdampfenden Mediums größer als auf der Seite des Austritts 7. In das Verdampfungsrohr 3 ist über einen Teil seiner Länge ein um seine Längsachse verdrehter Verdrängungskörper 4 eingebracht, der zumindest über einen Teil seiner Längenausdehnung an einer Innenwandung 5 des Verdampfungsrohrs 3 anliegt. Der Verdrängungskörper 4 ist bis zur Verjüngung des Innendurchmessers des Verdampfungsrohrs 3 in selbiges eingebracht. Die spiralförmige Geometrie des im Verdampfungsrohr 3 angeordneten Verdrängungskörpers 4 hat zum einen die Funktion, den Bauraum auf ein Mindestmaß zu verkleinern und einen direkten Gasauswurf durch ständige Umlenkung des Dampfstroms zu vermeiden. Das zu verdampfende Medium strömt in Pfeilrichtung 9 in das Verdampfungsrohr 3, welches mittels einer Heizeinrichtung 8 temperiert, insbesondere erwärmt, wird. Aufgrund des Hohlraums 11 erfolgt die Temperierung des Verdampfungsrohrs 3 im Bereich der Verdampfungszone 12 durch Wärmestrahlung und indirekt über Wärmeleitung über das Verdampfungsrohr 3, allerdings nur in Richtung Austritt 7. So lassen sich entsprechend niedrige, angepasste Wärmeleistungen erzeugen und regeln. Durch den Energieeintrag mittels Wärmestrahlung gelingt ein sanfter überhitzungsfreier Wärmeeintrag in das 2-Phasengebiet der Verdampfungszone 12 mit ausreichend niedriger Leistung, so dass mit einem kontinuierlichen Wärmestrom eine kontinuierliche Verdampfung erzeugt und die flüssige Phase störungsfrei in die Gasphase überführt wird. Der Eintrittsbereich bleibt dadurch kühler, was zusätzlich eine Vorverdampfung des eintretenden Mediums verhindert. Als Heizeinrichtung 8 dienen beispielsweise keramische Mikroheizelemente mit Platindraht, die in Niederspannung betrieben und geregelt werden können. Zudem kann durch die Einbausituation und die Länge der stabförmigen Heizeinrichtungen 8, welche beispielsweise in Umfangsrichtung im Gehäuse angeordnet sein können, der Bereich des Austritts 7, 13 und der sich zwischen beiden Austritten 7 und 13 befindende Übergangsbereich 14 des Verdampfungsrohrs 3 ausreichend mitbeheizt werden, um Kondensation nach dem Verdampfungsprozess zu vermeiden. So wird sichergestellt, dass ein in Pfeilrichtung 9 über den Eintritt 6 zugeführtes Medium im Verdampfungsrohr 3 verdampft wird und im Anschluss über eine am Austritt 7 durch den Übergangsbereichs 14 hin zum Austritt 13 geführt wird. Am Austritt 13 kann eine hier nicht dargestellte Düse 10 angeordnet sein. Der erzeugte Dampf sollte nicht, ähnlich wie in einem Kessel, akkumulieren sondern direkt in die angrenzende Umgebung ausströmen. Hierzu müssen alle medienführenden Leitungen, insbesondere das Verdampfungsrohr 3, auf eine Mindestmaß an Volumen beschränkt sein, d. h. diese Bauteile dürfen keine oder nur minimal kleine TotVolumina aufweisen. Anders ist eine kontinuierliche Dampferzeugung bei einer Dosierung des zu verdampfenden Mediums nicht möglich.

Eine Beheizung der Vorrichtung 1 ist darüber hinaus nicht nur wie in den in den Fign. 1 und 2 beschriebenen Ausführungsbeispielen durch eine Heizeinrichtung 8 von außen möglich, sondern zum einen auch durch eine nicht dargestellte Heizeinrichtung 8 von innen, z. B. durch eine Beheizung aus dem Inneren des Verdrängungskörpers 3 heraus, oder zum anderen auch durch eine beidseitige Beheizung, also eine nicht dargestellte Heizeinrichtung 8 von innen und eine Heizeinrichtung 8 außen. Die Heizeinrichtung 8 der Vorrichtung 1 kann vorzugsweise als elektrische Beheizung, als Beheizung mittels heißer Gase (Abluft, Abgase), durch andere Wärmeträger wie Wasser, Öl oder dergleichen, durch Strahlung, induktiv oder mittels selbstregelnden Heizelementen ausgeführt werden. Zudem ist auch eine Integration in unterschiedlichste Bauteile möglich, wodurch bspw. die Abwärme des Bauteils zur Beheizung der Vorrichtung 1 genutzt werden kann. Somit kann eine zumindest teilweise Wärmerückgewinnung erfolgen.

Die einzelnen Bauteile der beiden in den Fign. 1 und 2 dargestellten erfindungsgemäßen Ausführungsbeispiele sind vorzugsweise aus Aluminium, Messing, Silber, Perfluoralkoxylalkan (Kurzzeichen PFA), Polytetrafluorethylen (Kurzzeichen PTFE) oder Edelstahl gefertigt. Darüber hinaus ist eine Fertigung der einzelnen Bauteile aus Kunststoff, Metall, Edelmetall, Buntmetall oder dergleichen möglich, wobei die Bauteile für den Vakuum-, Hochdurck- und Niederdruckbereich auslegbar sind.

Die Vorrichtung 1 kann, wie in den Fign. 1 und 2 erläutert, als Einzelrohr ausgeführt sein. Zusätzlich sind bspw. Varianten als zylindrisch angeordnete Mehrfachrohre, die parallel betrieben werden, oder als koaxiale Rohranordnung (schalenförmig) der Vorrichtung 1 denkbar und möglich. Hierdurch besteht die Möglichkeit den Volumenstrom und somit die mengenmäßigen Durchsatz an verdampften Medium zu erhöhen bzw. sogar unterschiedliche Medien gleichzeitig zu verdampfen. Des Weiteren ist eine lageunabhängige Positionierung der Vorrichtung 1 bei garantierter Funktionalität der Vorrichtung 1 möglich.

Bei Bedarf ist es möglich die erfindungsgemäße Vorrichtung 1 mit Luft oder mit einem Vortexkühler zu kühlen, um Überhitzungen abzufangen bzw. um Medien mit niedrigem Siedepunkt in der Zuführung kalt zu halten.

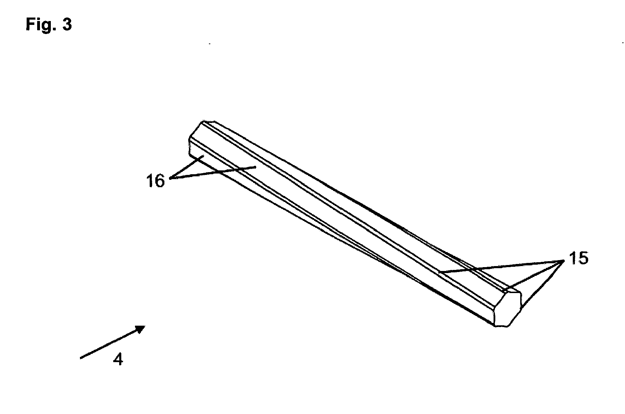

Eine perspektivische Darstellung eines Ausführungsbeispiels des verdrehten Verdrängungskörpers 4 der erfindungsgemäßen Vorrichtung 1 zur pulsations- und oszillationsfreien Totalverdampfung von Medien wird in Fig. 3 gezeigt. Der dargestellte Verdrängungskörper 4 hat einen sechseckigen Querschnitt und weist damit sechs Kanten 15 und sechs Flächen 16 in Umfangsrichtung seiner Längenausdehnung auf. Der Verdrängungskörper 4 kann grundsätzlich einen n-eckigen Querschnitt aufweisen, wobei n der Anzahl der Ecken entspricht, muss zumindest aber einen dreieckigen Querschnitt zeigen. Darüber hinaus kann als Verdrängungskörper 3 auch ein Verdampfungskanal gemäß der Patentanmeldung DE 10 2014 009 785 eingesetzt werden. Der Verdrängungskörper 3 ist vorzugsweise durch Verdrehen, gegenseitiges Verdrehen (erst in eine Richtung, dann wieder in die Gegenrichtung verdreht), abschnittsweises Verdrehen (Zig-Zig-Verdrehen aufeinander folgender Abschnitte des Verdrängungskörpers 3), mäanderförmiges Verdrehen oder dergleichen hergestellt, wobei der Verdrängungskörper 3 einen beliebigen Verdrehwinkel aufweist.

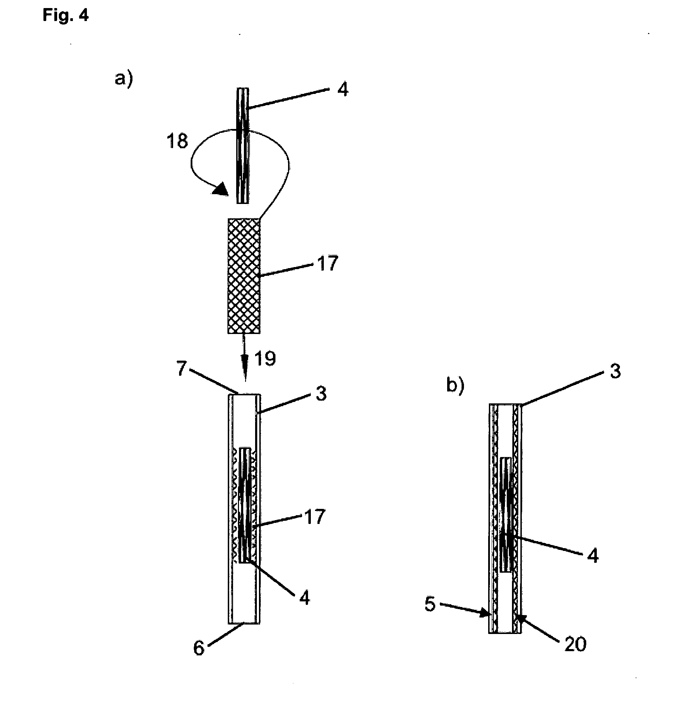

In Fig. 4a ist eine Montageanleitung zum Zusammenbau der einzelnen Bauteile eines weiteren Ausführungsbeispiels der erfindungsgemäßen Vorrichtung 1 gezeigt. Hierbei wird um einen Verdrängungskörper 4 ein Gewebematerial 17 in Pfeilrichtung 18 gewickelt. Im Anschluss daran wird der Verdrängungskörper 4, welcher mit dem Gewebematerial 17 umwickelt ist in Pfeilrichtung 19 in ein Verdampfungsrohr 3 so eingeführt, dass dieser mittig zwischen einem Eintritt 6 und einem Austritt 7 angeordnet ist. Das Gewebematerial 17 kann eine Oberfläche aufweisen, die vorzugsweise ein Streckmetall, ein Gewebe, ein Hybridgewebe, ein Kunststoffgewebe, ein Textilgewebe, ein poröses Material, ein poröses Rohr, ein gestricktes Gewebe, ein gewebtes Gewebe, ein Material mit einer angerauten Oberfläche, ein beschichtetes Material, ein Netz (Mesh), ein Metalmesh, ein kettenartiges Gewebe, ein eine kapillarstruktur aufweisendes Material, ein eine sinterstruktur aufweisendes Material, ein Metalldruck, ein lasergesintertes Gewebe oder dergleichen ist.

Die Fig. 4b zeigt dagegen einen mittig in einem Verdampfungsrohr 3 angeordneten Verdrängungskörper 4, wobei die Innenwandung 5 des Verdampfungsrohrs 3 eine mikrostrukturierte Oberfläche 20 aufweist. Zusätzlich ist es möglich, dass sowohl das Verdampfungsrohr 3 auf seiner Innenwandung 5 als auch der Verdrängungskörper 4 eine strukturierte Oberfläche 20, beispielsweise ausgebildet als poröse Oberflächen, als körnige Oberflächen, als sinterartige Oberfläche oder als eine Kombination daraus, aufweisen. Zu diesem Zweck der Oberflächenvergrößerung kann darüber hinaus zusätzlich, wie in Fig. 4a gezeigt, auch zwischen Verdampfungsrohr 3 und Verdrängungskörper 4 ein eingebrachtes Drahtgewebe 17 angeordnet werden. Auch kann der gesamte Verdrängungskörper 4 aus einem porösen Material bestehen. Hierdurch wird im 2-Phasengebiet eine definierte Trennfläche zwischen Flüssigkeit im Eintritt 6 und gasförmigem Dampf am Austritt 7 ausgebildet, die zudem auch zu einer weiteren Volumenverkleinerung beiträgt.

Eine Auslegung der Vorrichtung 1 wird insbesondere durch eine Kombination der unterschiedlichen einsetzbaren Materialien oder durch eine Geometrievariation der einzelnen Komponenten der Vorrichtung 1, vorzugsweise durch eine Anpassung der Oberflächencharakteristik bzw. -struktur der eingesetzten Komponenten, des Verdrängungskörpers 3 und des Verdampfungsrohrs 2, hier vorzugsweise der Länge und/oder des Durchmessers, vorgenommen. Durch die Variabilität in Material und/oder Anzahl und/oder Größe und/oder Struktur ergibt sich eine fast beliebige Auslegbarkeit der Vorrichtung 1. Somit wird eine stufenlose Auslegung der Vorrichtung 1 ermöglicht, wobei Volumenströme im mikroskalaren Bereich (Nanoliter) bis hin zum makroskalaren Bereich (Milliliter) möglich sind.

Alle hier dargestellten Merkmale können sowohl einzeln als auch in beliebiger Kombination miteinander erfindungswesentlich sein.

### Bezugszahlenliste

- 1: Vorrichtung
- 2: Gehäuse
- 3: Verdampfungsrohr
- 4: Verdrängungskörper
- 5: Innenwandung
- 6: Eintritt
- 7: Austritt
- 8: Heizeinrichtung
- 9: Pfeilrichtung
- 10: Düse
- 11: Hohlraum
- 12: Verdampfungszone
- 13: Austritt
- 14: Übergangsbereich
- 15: Kante
- 16: Fläche
- 17: Gewebematerial
- 18: Pfeilrichtung
- 19: Pfeilrichtung
- 20: mikrostrukturierte Oberfläche

## Patentansprüche

1. Vorrichtung (1) zur pulsations- und oszillationsfreien Totalverdampfung von Medien, wobei die Vorrichtung (1) ein Verdampfungsrohr (3) mit mindestens einem Eintritt (6) und mindestens einem Austritt (7) für die zu verdampfenden Medien aufweist und koaxial zumindest in einem Teil des Verdampfungsrohrs (3) ein Verdrängungskörper (4) angeordnet ist, wobei der Verdrängungskörper (4) zumindest über einen Teil seiner Längenausdehnung an einer Innenwandung (5) des Verdampfungsrohrs (3) anliegt, so dass mindestens ein Verdampfungskanal entsteht, und das Verdampfungsrohr (3) mittels einer Heizeinrichtung (8) temperierbar ist,
**dadurch gekennzeichnet, dass**
- der Verdrängungskörper (4) eine größere Längen- als Breitenausdehnung aufweist,
- der Verdrängungskörper (4) einen zumindest dreieckigen Querschnitt aufweist,
- der Verdrängungskörper (4) um seine Längsachse verdreht ist.

2. Vorrichtung (1) nach Anspruch 1,
**dadurch gekennzeichnet,**
**dass** der Verdrängungskörper (4) eine mikrostrukturierte Oberfläche (20) aufweist.

3. Vorrichtung (1) nach Anspruch 1 oder 2,
**dadurch gekennzeichnet,**
**dass** die Innenwandung (5) des Verdampfungsrohrs (3) eine mikrostrukturierte Oberfläche (20) aufweist.

4. Vorrichtung (1) nach einem der vorhergehenden Ansprüche,
**dadurch gekennzeichnet,**
**dass** der Verdrängungskörper (4) aus einem porösen Material besteht.

5. Vorrichtung (1) nach einem der vorhergehenden Ansprüche,
**dadurch gekennzeichnet,**
**dass** das Verdampfungsrohr (3) durch eine Heizeinrichtung (8) mittels Wärmestrahlung temperiert wird.

6. Vorrichtung (1) nach einem der vorhergehenden Ansprüche,
**dadurch gekennzeichnet,**
**dass** am Austritt (7) aus dem Verdampfungsrohr (3) eine Düse (10) angeordnet ist.

7. Vorrichtung (1) nach Anspruch 6,
**dadurch gekennzeichnet,**
**dass** durch die Düse (10) ein zielgerichteter Dampfstrahl erzeugt wird.

8. Vorrichtung (1) nach einem der vorhergehenden Ansprüche,
**dadurch gekennzeichnet,**
**dass** ein erzeugter Dampfstrom tropfenfrei ist und in Temperatur und/oder Flussrate regelbar ist.

9. Vorrichtung (1) zur pulsations- und oszillationsfreien Totalverdampfung von Medien, wobei die Vorrichtung (1) ein Verdampfungsrohr (3) mit mindestens einem Eintritt (6) und mindestens einem Austritt (7) für die zu verdampfenden Medien aufweist und koaxial zumindest in einem Teil des Verdampfungsrohrs (3) ein Verdrängungskörper (4) angeordnet ist und das Verdampfungsrohr (3) mittels einer Heizeinrichtung (8) temperierbar ist,
**dadurch gekennzeichnet, dass**
- der Verdrängungskörper (4) eine größere Längen- als Breitenausdehnung aufweist,
- der Verdrängungskörper (4) einen zumindest dreieckigen Querschnitt aufweist,
- der Verdrängungskörper (4) um seine Längsachse verdreht ist, und
- zwischen dem Verdampfungsrohr (3) und dem Verdrängungskörper (4) ein die Oberfläche vergrößerndes Gewebematerial (17) angeordnet ist.

10. Vorrichtung nach Anspruch 9,
**dadurch gekennzeichnet,**
**dass** das Gewebematerial (17) vorzugsweise ein Streckmetall, ein Gewebe, ein Hybridgewebe, ein Kunststoffgewebe, ein Textilgewebe, ein poröses Material, ein poröses Rohr, ein gestricktes Gewebe, ein gewebtes Gewebe, ein Material mit einer angerauten Oberfläche, eine beschichtetes Material, ein Netz (Mesh), ein Metalmesh, ein kettenartiges Gewebe, ein eine kapillarstruktur aufweisendes Material, ein eine sinterstruktur aufweisendes Material, ein Metalldruck, ein lasergesintertes Gewebe oder dergleichen ist.

11. Vorrichtung (1) nach Anspruch 9 oder Anspruch 10,
**dadurch gekennzeichnet,**
**dass** der Verdrängungskörper (4) eine mikrostrukturierte Oberfläche (20) aufweist.

12. Vorrichtung (1) nach einem der Ansprüche 9 bis 11,
**dadurch gekennzeichnet,**
**dass** die Innenwandung (5) des Verdampfungsrohrs (3) eine mikrostrukturierte Oberfläche (20) aufweist.

13. Vorrichtung (1) nach einem der Ansprüche 9 bis 12,
**dadurch gekennzeichnet,**
**dass** der Verdrängungskörper (4) aus einem porösen Material besteht.

14. Vorrichtung (1) nach einem der Ansprüche 9 bis 13,
**dadurch gekennzeichnet,**
**dass** am Austritt (7) aus dem Verdampfungsrohr (3) eine Düse (10) angeordnet ist.

15. Handgerät zur Bedampfung von Oberflächen
**dadurch gekennzeichnet,**
**dass** in dem Handgerät eine Vorrichtung (1) zur pulsations- und oszillationsfreien Totalverdampfung von Medien gemäß einem der Ansprüche 1 bis 14 angeordnet ist.
